# EUROPÄISCHE PATENTSCHRIFT

(11) **EP 3 124 730 B1**
(45) Veröffentlichungstag und Bekanntmachung des Hinweises auf die Patenterteilung: **19.05.2021**
(21) Anmeldenummer: 16179712.1
(22) Anmeldetag: 15.07.2016
(51) Int. Cl.: E05F 3/12, F16K 1/42, F16K 1/54

(54) **VENTIL FÜR EINEN TÜRSCHLIESSER**
VALVE FOR A DOOR CLOSER
SOUPAPE DE FERME-PORTE

(30) Priorität: 31.07.2015 DE 102015214647
(43) Veröffentlichungstag der Anmeldung: 01.02.2017
(73) Patentinhaber: GEZE GmbH, 71229 Leonberg (DE)
(72) Erfinder: Wörner, Benjamin, 70825 Korntal-Münchingen (DE)

(56) Entgegenhaltungen:
- WO-A1-2004/003324
- AT-B- 219 450
- DE-A1- 1 903 352
- US-A- 2 964 779
- US-B1- 6 588 725

## Beschreibung

Die vorliegende Erfindung betrifft ein Ventil für einen hydraulisches Tür-, Tor- oder Fensterantrieb, insbesondere für einen hydraulischen Türschließer, welches in einem Hydraulikkanal angeordnet ist.

Ein hydraulischer Türschließer weist üblicherweise einen in einem Schließergehäuse angeordneten, mit einer Feder beaufschlagten Kolben auf, der mit einer Welle zusammenwirkt, an der ein Hebel zur Betätigung einer Tür angeordnet ist. Beim Öffnen der Tür wird der Hebel betätigt und über die Welle und den Kolben die am Kolben anliegende Feder gespannt. Dabei kann ein im Schließergehäuse befindliches Hydraulikfluid über Hydraulikkanäle und Ventile von einer Kolbenseite auf die andere überströmen, da sich die Kolbenräume beiderseits des Kolbens durch dessen Verschiebung verändern. Beim Öffnen der Tür wird ein möglichst leichtes Überströmen des Hydraulikfluids ermöglicht, um ein ungebremstes Betätigen der Tür zu erzielen. Beim selbsttätigen Schließen der Tür durch das Entspannen der beim Öffnen gespannten Feder wird der Kolben wieder in seine Ausgangslage zurückgeführt, wobei das Hydraulikfluid wieder überströmen muss. Durch die Anordnung von Hydraulikkanälen mit Ventilen kann der Schließvorgang gebremst erfolgen, wobei mehrere Phasen des Schließvorgangs mit unterschiedlichen Schließgeschwindigkeiten möglich sind, wodurch ein sicheres Schließen der Tür erreicht wird. Derartige Ventile sind auch in Hydraulikkreisläufen von anderen Tür-, Tor- oder Fensterantrieben verwendbar.

Dabei werden zur Steuerung der Schließgeschwindigkeit in den Türschließern bisher meistens Regulierventile mit einem Drosselkegel verwendet. Aufgrund geringer Volumenströme und großer Querschnittsveränderungen ist mit einer jeweiligen Verstellung derartiger bisher üblichen Ventile eine exakte Einstellung der Schließgeschwindigkeit jedoch meistens nur schwer umsetzbar bzw. reproduzierbar. Zudem sind die bisher üblichen Ventile aufgrund des relativ engen, ringförmigen Drosselspalts besonders schmutzanfällig.

In der WO 2004/003324 A1 ist ein Ventil beschrieben, das ein Ventilglied mit einer Drosselkontur besitzt, über das der Durchfluss eines Hydraulikfluids regulierbar ist.

Der Erfindung liegt die Aufgabe zugrunde, ein Ventil der eingangs genannten Art anzugeben, bei dem die erwähnten Nachteile beseitigt sind. Dabei sollen insbesondere die Einstellbarkeit der Schließgeschwindigkeit verbessert und die Schmutzanfälligkeit verringert werden.

Erfindungsgemäß wird die Aufgabe durch ein Ventil mit den Merkmalen des Anspruchs 1 gelöst. Bevorzugte Ausführungsformen des erfindungsgemäßen Ventils ergeben sich aus den Unteransprüchen, der vorliegenden Beschreibung sowie der Zeichnung.

Das erfindungsgemäße Ventil ist in einem Hydraulikkanal angeordnet, durch den Hydraulikfluid strömen kann, und umfasst ein in einer Ventilbohrung verschiebbares Ventilglied, welches z.B. durch Verdrehen in einem Gewinde axial verschiebbar und damit das Ventil einstellbar ist, und eine am Innenumfang der Ventilbohrung oder am Außenumfang des Ventilglieds vorgesehene, wenigstens einen Abströmkanal umfassende Drosselkontur, die in Abhängigkeit von der axialen Verschiebung des Ventilglieds relativ zur Ventilbohrung für ein Überströmen des Hydraulikfluids geöffnet oder geschlossen wird und/oder durch die über eine axiale Verschiebung des Ventilglieds der Durchfluss des überströmenden Hydraulikfluids regulierbar ist.

Die Ventilbohrung ist insbesondere auch durch eine entsprechende Bohrung einer in das Türschließergehäuse einsetzbaren Hülse oder dergleichen gebildet sein. Eine solche Hülse ist beispielsweise im Spritzguss-Verfahren einschließlich der gegebenenfalls am Innenumfang der Hülse vorzusehenden Drosselkontur kostengünstig herstellbar. Die Drosselkontur kann beispielsweise auch mittels eines Stempels durch Prägen in die Hülse eingebracht werden. Grundsätzlich kann die Drosselkontur jedoch auch beim Einsatz einer Hülse am Außenumfang des Ventilglieds bzw. des Kolbens vorgesehen sein.

Die Hülse kann in das Türschließergehäuse beispielsweise einschraubbar, einpressbar, einklipsbar oder dergleichen sein.

Die Drosselkontur kann, wie bereits erwähnt, beispielsweise in den Innenumfang einer Hülse oder auch direkt in das Türschließergehäuse bzw. den Innenumfang einer im Türschließergehäuse ausgebildeten Ventilbohrung eingebracht werden.

Aufgrund dieser Ausbildung ist die Schließgeschwindigkeit des Ventils wesentlich genauer einstellbar und reproduzierbar. Zudem ist das Ventil weniger gegen Schmutz anfällig, da der Strömungsquerschnitt eines jeweiligen Abströmkanals auf diesen begrenzt größer gewählt werden kann. Schließlich kann der sich in Bewegungsrichtung des Ventilglieds ergebende axiale Strömungsquerschnittsverlauf der Drosselkontur bzw. eines jeweiligen Abströmkanals so an den jeweiligen Türschließer und Ventilhub angepasst werden, dass sich eine optimale Einstellbarkeit der Schließgeschwindigkeit ergibt.

Bevorzugt ist die Drosselkontur am Innenumfang einer zylindrischen Ventilbohrung und/oder am Außenumfang eines zylindrischen Abschnitts des Ventilglieds, mit einem oder mehreren Abströmkanälen von der Zylinderform abweichend, vorgesehen.

Im Gegensatz zu den bisher üblichen Ventilen sind somit kein Drosselkegel sowie keine konische Ventilbohrung mehr erforderlich.

Bevorzugt weist das Ventilglied eine mit der am Innenumfang der Ventilbohrung vorgesehenen Drosselkontur zusammenwirkende Kontur und/oder die Ventilbohrung eine mit der am Außenumfang des Ventilglieds vorgesehenen Drosselkontur zusammenwirkende Kontur auf. Vorteilhaft weist diese, zur Ventilbohrung bzw. zum Ventilglied radial abragend, einen Hinterschnitt auf. Die Kontur kann in Axialrichtung des Ventils als wenig hohe Steuerfläche ausgebildet, den Strömungsquerschnitt sprungartig verengend, wie eine Blende weitgehend viskositäts- bzw. temperaturunabhängig wirken oder aber als in Axialrichtung des Ventils hohe Steuerfläche ausgebildet wie eine Drossel wirken. Durch die radial abragende Kontur sind verschiedene Drosselbereiche der Drosselkontur ansteuerbar. Bei einer wenig hohen Kontur ist dabei eine genaue und zur Drosselkontur passende Ansteuerung möglich.

Es ist jedoch auch eine Ausführung ohne Hinterschnitt vorteilhaft, mit der ebenfalls ein drosselähnliches Strömungsverhalten erreichbar ist.

Die Kontur kann am Außenumfang des Ventilglieds und/oder am Innenumfang der Ventilbohrung ausgebildet oder beispielsweise auch durch einen in einer Nut am Außenumfang des Ventilglieds angeordneten Dichtring bzw. durch einen in einer Nut am Innenumfang der Ventilbohrung angeordneten Dichtring gebildet sein.

Von Vorteil für eine variable Ansteuerung ist insbesondere, wenn die Drosselkontur mehrere in Umfangsrichtung verteilte Abströmkanäle umfasst.

Bevorzugt erstreckt sich ein jeweiliger Abströmkanal der Drosselkontur zumindest im Wesentlichen in axialer Richtung, in der das Ventilglied verschiebbar ist. Dabei kann die Drosselkontur zumindest einen Abströmkanal mit einem in Axialrichtung zumindest abschnittsweise konstanten Strömungsquerschnitt und/oder zumindest einen Abströmkanal mit einem sich in Axialrichtung ändernden Strömungsquerschnitt umfassen, welcher auch stufenförmig umgesetzt werden kann. Zudem ist auch eine Ausführung mit zumindest einem Abströmkanal denkbar, der eine Kombination aus wenigstens einem Abschnitt konstanten Strömungsquerschnitts und wenigstens einem Abschnitt mit sich änderndem Strömungsquerschnitt umfasst.

Im Fall einer Drosselkontur mit einem sich in Axialrichtung ändernden Strömungsquerschnitt kann die Drosselkontur beispielsweise zumindest einen Abströmkanal mit einem zumindest abschnittsweise in Axialrichtung kontinuierlich größer bzw. kontinuierlich kleiner werdenden Strömungsquerschnitt und/oder zumindest einen Abströmkanal mit einem zumindest abschnittsweise stufenweise größer bzw. stufenweise kleiner werdenden Strömungsquerschnitt umfassen. Zudem kann ein jeweiliger Abströmkanal auch eine beliebige Kombination von Abschnitten mit sich in Axialrichtung ändernden und konstanten Strömungsquerschnitten aufweisen. Grundsätzlich kann der Strömungsquerschnitt eines jeweiligen Abströmkanals beispielsweise rund, keilförmig, viereckig oder dergleichen ausgeführt sein und sich nach Bedarf in x-, y- oder z-Richtung verjüngen, ausdehnen, kontinuierlich zunehmen oder abnehmen, oder mit einem Kurvenverlauf ausgebildet sein. So kann beispielsweise die Tiefe eines jeweiligen Abströmkanals kontinuierlich zunehmen oder abnehmen bzw. mit einer entsprechenden kontinuierlichen Steigung versehen sein. Zudem können beispielsweise auch Stufen und Steigung kombiniert sein, dementsprechend wie der Strömungsquerschnitt zur Steuerung gebraucht wird.

Von Vorteil ist insbesondere auch, wenn die Drosselkontur mehrere Abströmkanäle umfasst, die zumindest teilweise eine unterschiedliche axiale Länge besitzen. Mit einer jeweiligen axialen Verschiebung des Ventilglieds können somit nacheinander unterschiedliche Abströmkanäle geöffnet bzw. geschlossen werden.

Das Ventilglied kann auch durch einen in der Ventilbohrung verschiebbaren Kolben gebildet sein. Entsprechend kann die Drosselkontur insbesondere auch am Außenumfang eines solchen Kolbens vorgesehen sein, womit die Herstellungskosten entsprechend gesenkt werden. Dieser Kolben kann der federbeaufschlage, mit einer Antriebswelle eines Türschließers über eine Verzahnung zusammenwirkende Schließerkolben sein. Mit der Integration der Drosselkontur in der Kolbenlauffläche oder am Innenumfang der den Kolben aufnehmenden Ventilbohrung ist insbesondere auch die Umsetzung eines Schließzeitverlaufs über eine entsprechende Strömungsquerschnittsänderung realisierbar. Mit einer Integration der Drosselkontur im Außenumfang des Kolbens oder im Innenumfang der Ventilbohrung bzw. auf der Kolbenlauffläche können die bisher erforderlichen Regulierventile entfallen. Über eine entsprechende Kombination von sich in Axialrichtung ergebenden Strömungsquerschnittsänderungen der Drosselkontur bzw. der Abströmkanäle ist unter anderem eine Schließverzögerung, eine Beeinflussung der Schließzeit, ein Endschlag realisierbar.

Gemäß einer weiteren vorteilhaften Ausführungsform des erfindungsgemäßen Ventils umfasst die Drosselkontur zumindest einen Abströmkanal, dessen axiale Strömungsquerschnittsänderung an den Hub des Ventilglieds bzw. an die Steigung eines Gewindes angepasst ist, über das der Hub des Ventilglieds einstellbar ist. Über die Gewindesteigung und den Verlauf der Drosselkontur (des Abströmkanals oder der Abströmkanäle) kann genau ausgelegt werden, wie viele Ventilumdrehungen bei der Einstellung notwendig sind, um bestimmte Querschnittsveränderungen für den Öldurchfluss zu erreichen.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform eines Ventils mit einer am Innenumfang der Ventilbohrung vorgesehenen, mehrere Abströmkanäle umfassenden Drosselkontur,
- Fig. 2: eine schematische Querschnittsdarstellung des Ventils gemäß Fig. 1,
- Fig. 3a und 3b: eine schematische Längsschnittdarstellung verschiedener Abströmkanäle mit unterschiedlichen Strömungsquerschnitten,
- Fig. 4: eine schematische Darstellung einer Ausführungsform eines erfindungsgemäßen Ventils mit am Innenumfang der Ventilbohrung vorgesehener Drosselkontur, wobei die Ventilbohrung einschließlich der Drosselkontur durch eine entsprechende Bohrung einer in das Türschließergehäuse einsetzbaren Hülse gebildet ist,
- Fig. 5: eine schematische Darstellung einer beispielhaften Ausführungsform eines Ventils mit am Innenumfang der Ventilbohrung vorgesehener Drosselkontur, wobei die Ventilbohrung im Türschließergehäuse vorgesehen und entsprechend die Drosselkontur direkt in das Türschließergehäuse eingebracht ist,
- Fig. 6a und 6b: eine schematische Darstellung einer beispielhaften Ausführungsform eines Ventils mit am Außenumfang des Ventilglieds vorgesehener Drosselkontur und einer Ventilbohrung, die durch eine entsprechende Bohrung einer in das Türschließergehäuse einsetzbaren Hülse gebildet ist, die mit einer durch einen Dichtring gebildeten Kontur versehen ist,
- Fig. 7a und 7b: eine schematische Darstellung einer beispielhaften Ausführungsform eines Ventils mit am Außenumfang des Ventilglieds vorgesehener Drosselkontur und einer Ventilbohrung, die durch eine entsprechende Bohrung einer in das Türschließergehäuse einsetzbaren Hülse gebildet ist, an der eine Kontur festgelegt oder angeformt ist, und
- Fig. 8: eine schematische Darstellung eines weiteren Ventils mit am Außenumfang des Ventilglieds vorgesehener Drosselkontur und einer Ventilbohrung, wobei die Ventilbohrung im Türschließergehäuse vorgesehen und entsprechend der Dichtring direkt in das Türschließergehäuse eingebracht ist.

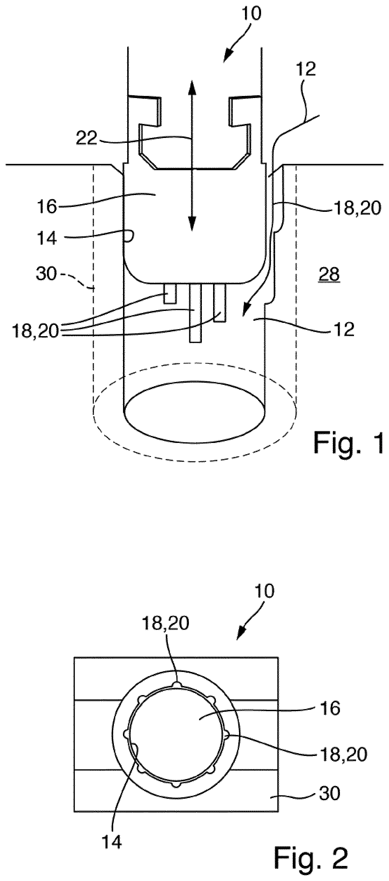

Die Figuren 1 bis 8 zeigen in schematischer Darstellung unterschiedliche beispielhafte Ausführungsformen eines Ventils 10 für einen hydraulischen Türschließer, das in einem Hydraulikkanal angeordnet ist, durch den Hydraulikfluid 12 strömen kann.

Dabei umfasst das Ventil 10 jeweils ein in einer Ventilbohrung 14, hier in einem Gewinde 26 axial verschiebbares Ventilglied 16 und eine am Innenumfang der Ventilbohrung 14 oder am Außenumfang des Ventilglieds 16 vorgesehene, wenigstens einen Abströmkanal 18 umfassende, Drosselkontur 20, die in Abhängigkeit von der axialen Verschiebung 22 des Ventilglieds 16 relativ zur Ventilbohrung 14 für ein Überströmen des Hydraulikfluids 12 geöffnet oder geschlossen wird und/oder durch die über eine axiale Verschiebung 22 des Ventilglieds 16 der Durchfluss des überströmenden Hydraulikfluids 12 regulierbar ist.

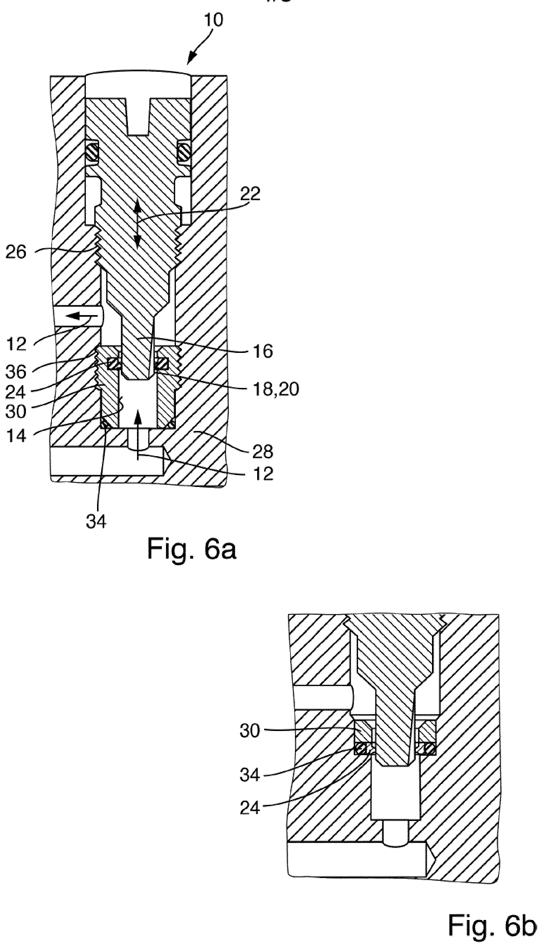

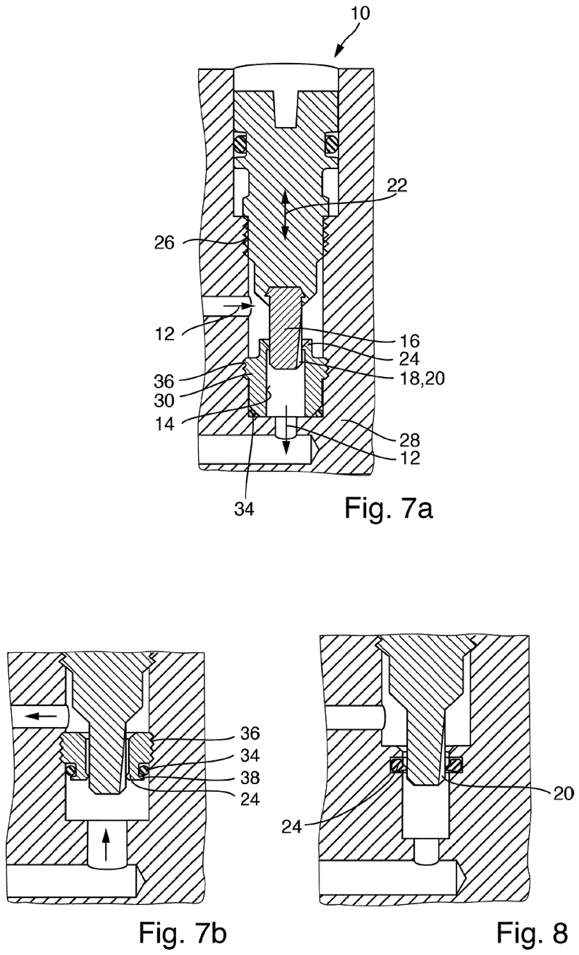

Das Ventilglied 16 ist über einen zylindrischen Abschnitt in der ebenfalls zylindrischen Ventilbohrung 14 axial verschiebbar geführt, wobei die Drosselkontur 20 bei den in den Fig. 1, 2, 4 und 5 dargestellten Ausführungsformen des Ventils 10 jeweils am Innenumfang der zylindrischen Ventilbohrung 14 und bei den in den Fig. 6a und 6b und 7 dargestellten Ausführungsformen des Ventils 10 jeweils am Außenumfang des zylindrischen Abschnitts des Ventilglieds 16 vorgesehen ist.

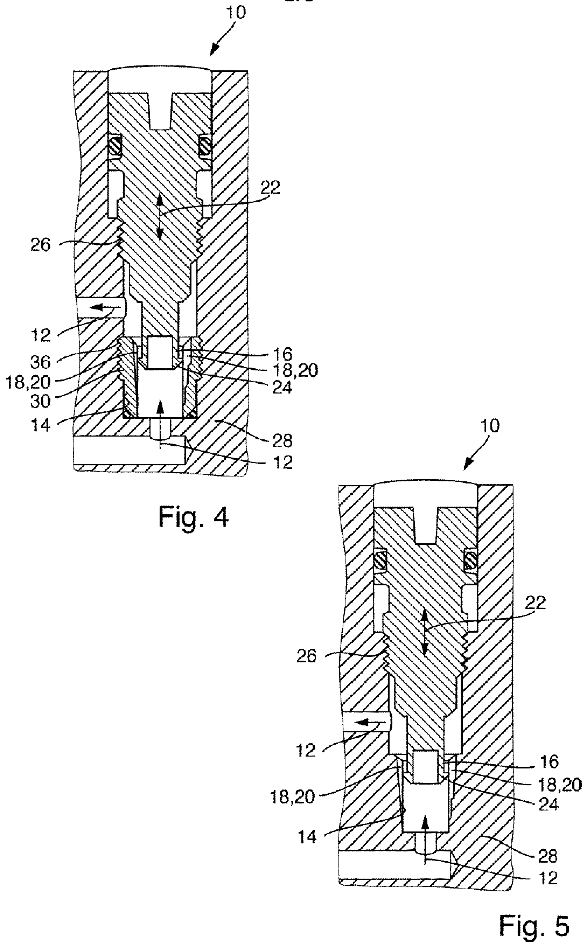

Wie anhand der Fig. 4 und 5 zu erkennen ist, umfasst in dem Fall, dass die Drosselkontur 20 am Innenumfang der Hülse 30 oder der Ventilbohrung 14 vorgesehen ist, das Ventilglied 16 eine mit dieser vorgesehenen Drosselkontur 20 zusammenwirkende Kontur 24. In dem Fall, dass die Drosselkontur 20 am Außenumfang des Ventilglieds 16 vorgesehen ist, weist die Ventilbohrung 14 eine mit dieser am Außenumfang des Ventilglieds 16 vorgesehenen Drosselkontur 20 zusammenwirkende Kontur 24 auf (vgl. die Fig. 6a, 6b und 7).

Die Kontur 24, deren axiale Höhe im Ventil den Durchfluss beeinflusst, kann am Ventilglied 16 bzw. am Innenumfang der Ventilbohrung 14 ausgebildet (vgl. Fig. 4, 5 und 7) oder durch einen in einer Nut am Außenumfang des Ventilglieds 16 angeordneten Dichtring bzw. durch einen in einer Nut am Innenumfang der Ventilbohrung 14 angeordneten Dichtring gebildet sein (vgl. Fig. 6a, 6b). Bei der Ausbildung am Ventilglied 16 mit einer wenig hohen Kontur 24 wird hier ein blendenähnliches Strömungsverhalten bewirkt, wodurch das Ventil unabhängig von Viskositätsänderungen des Hydrauliköls bei Temperaturänderungen ist. Bei einer Ausführung ohne Hinterschnitt oder mit einer axial hohen Kontur 24 wird ein drosselähnliches Strömungsverhalten bewirkt. Das Ventil 10, Teile davon sowie die Hülse 30 können aus Metall oder Kunststoff miteinander kombiniert werden. Wenn das Verhältnis der axialen Höhe der Kontur 24 zum Durchmesser des Strömungsquerschnitts im Abströmkanal 18 näherungsweise größer 1,5 ist, ist eine axial hohe Kontur 24 ausgebildet, wodurch das Ventil ein drosselähnliches Strömungsverhalten aufweist. Für die Ausbildung einer wenig hohen, den Strömungsquerschnitt sprungartig verengenden, Kontur 24 mit blendenähnlichem Strömungsverhalten liegt das beschriebene Verhältnis darunter.

Die Drosselkontur 20 kann einen oder auch mehrere in Umfangsrichtung verteilte Abströmkanäle 18 umfassen (vgl. beispielsweise die Fig. 1 und 2).

Bei den vorliegenden Ausführungsbeispielen erstreckt sich ein jeweiliger Abströmkanal 18 der Drosselkontur 20 zumindest im Wesentlichen in axialer Richtung, in der das Ventilglied 16 verschiebbar ist. Dabei kann die Drosselkontur 20 zumindest einen Abströmkanal 18 mit einem in Axialrichtung zumindest abschnittsweise konstanten Strömungsquerschnitt und/oder zumindest einen Abströmkanal 18 mit einem sich in Axialrichtung ändernden Strömungsquerschnitt umfassen. Dabei kann ein jeweiliger Abströmkanal 18 mit einem sich in Axialrichtung ändernden Strömungsquerschnitt beispielsweise einen zumindest abschnittsweise in Axialrichtung kontinuierlich größer bzw. kontinuierlich kleiner werdenden Strömungsquerschnitt und/oder einen zumindest abschnittsweise stufenweise größer bzw. stufenweise kleiner werdenden Strömungsquerschnitt umfassen. Grundsätzlich kann die Drosselkontur 20 eines solchen Abströmkanals 18 beispielsweise auch eine Kombination solcher Abschnitte mit sich änderndem Strömungsquerschnitt einschließlich wenigstens eines Abschnitts konstanten Strömungsquerschnitts umfassen. Dabei kann der Strömungsquerschnitt eines jeweiligen Abströmkanals 18 beispielsweise rund, keilförmig, viereckig usw. ausgeführt sein und sich in allen drei Richtungen verjüngen, ausdehnen, konstant bleiben, steigen, usw.

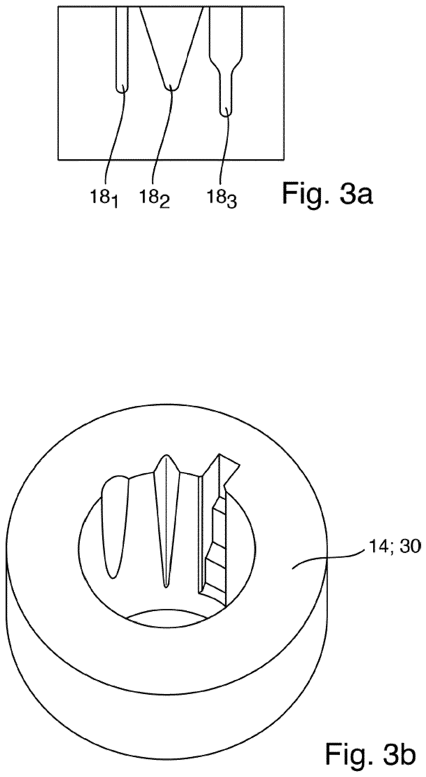

Die Fig. 3a zeigt in schematischer Längsschnittdarstellung verschiedene Abströmkanäle mit unterschiedlichen Strömungsquerschnitten. Dabei besitzt der Abströmkanal 18₁ einen in Axialrichtung zumindest abschnittsweise konstanten Strömungsquerschnitt, der Abströmkanal 18₂ einen zumindest abschnittsweise in Axialrichtung kontinuierlich größer bzw. kontinuierlich kleiner werdenden Strömungsquerschnitt und der Abströmkanal 18₃ einen zumindest abschnittsweise stufenweise größer bzw. stufenweise kleiner werdenden Strömungsquerschnitt. In der Fig. 3b sind weitere sinnvolle Strömungsquerschnitte in der Ventilbohrung 14 bzw. in der Hülse 30 gezeigt.

Wie insbesondere der Fig. 1 zu entnehmen ist, kann die Drosselkontur 20 insbesondere auch mehrere Abströmkanäle 18 umfassen, die zumindest teilweise eine unterschiedliche axiale Länge besitzen. Mit einer jeweiligen axialen Verschiebung des Ventilglieds 16 können somit verschiedene Abströmkanäle 18 nacheinander geöffnet bzw. geschlossen werden.

Das Ventilglied 16 kann beispielsweise durch einen in der Ventilbohrung 14 verschiebbaren Kolben gebildet sein. Mit einer Integration der Drosselkontur 20 in die Kolbenlauffläche werden nicht nur die Herstellungskosten minimiert, es ist dadurch auch ein vollständiger Schließzeitlauf über eine entsprechende Strömungsquerschnittsveränderung realisierbar.

Wie insbesondere anhand der Fig. 4 bis 8 zu erkennen ist, sind beispielsweise auch solche Ausführungen umsetzbar, bei denen der Hub des Ventilglieds 16 über ein Gewinde 26 verstellbar ist. Dabei kann die Drosselkontur 20 zumindest einen Abströmkanal 18 umfassen, dessen axiale Strömungsquerschnittsänderung an den Hub des Ventilglieds 16 bzw. an die Steigung des Gewindes 26 angepasst ist, über das der Hub des Ventilglieds 16 einstellbar ist. Das Ventilglied 16 weist an seinem dem Hydraulikfluss zugewandten Ende hier in vorteilhafter Weise eine Bohrung auf, wodurch der Hydraulikdruck dazu beiträgt, dass die Ventilgliedwandung in radialer Richtung beaufschlagt wird und so die Kontur 24 gegen die Ventilbohrung 14 gedrückt und die Dichtwirkung dadurch erhöht wird. Alternativ kann der Hydraulikdruck auch für eine Anpressung der Wandung der Hülse 30 in Richtung des Ventilglieds 16 genutzt werden, wodurch ebenfalls die Dichtwirkung erhöht wird.

Die Ventilbohrung 14 kann gegebenenfalls zusammen mit der Drosselkontur 20 direkt in das Türschließergehäuse 28 eingebracht sein (vgl. Fig. 5). Es sind jedoch insbesondere auch solche Ausführungen des Ventils 10 umsetzbar, bei denen die Ventilbohrung 14 durch eine entsprechende Bohrung einer in das Türschließergehäuse 28 einsetzbare Hülse 30 gebildet ist (vgl. die Fig. 1, 2, 4, 6 und 7). Ist die Drosselkontur 20 am Innenumfang der Ventilbohrung 14 vorgesehen, so kann diese Drosselkontur 20 entsprechend am Innenumfang der Hülse 30 vorgesehen sein. Dabei kann eine solche Hülse 30 einschließlich der Drosselkontur 20 beispielsweise im Spritzgussverfahren hergestellt werden. Die Drosselkontur 20 kann z.B. auch mittels eines Stempels durch Prägung in die Hülse 30 eingebracht werden.

Die Hülse 30 kann in das Türschließergehäuse 28 beispielsweise einschraubbar (Gewinde 36), einpressbar, einklipsbar oder dergleichen sein.

Bei der Ausführungsform gemäß den Fig. 1 und 2 ist eine mehrere Abströmkanäle 18 umfassende Drosselkontur 20 am Innenumfang der Ventilbohrung 16 vorgesehen, die in das Türschließergehäuse 28 eingebracht oder durch eine entsprechende Bohrung einer in das Türschließergehäuse 28 einsetzbaren Hülse 30 gebildet sein kann.

Fig. 4 zeigt eine beispielhafte Ausführungsform des erfindungsgemäßen Ventils 10 mit am Innenumfang der Ventilbohrung 14 vorgesehener Drosselkontur 20, wobei die Ventilbohrung 14 einschließlich der Drosselkontur 20 durch eine entsprechende Bohrung einer in das Türschließergehäuse 28 einsetzbaren Hülse 30 gebildet ist.

Dagegen zeigt Fig. 5 eine beispielhafte Ausführungsform des Ventils 10 mit am Innenumfang der Ventilbohrung 14 vorgesehener Drosselkontur 20, wobei die Ventilbohrung 14 im Türschließergehäuse 28 vorgesehen und entsprechend die Drosselkontur 20 direkt in das Türschließergehäuse 28 eingebracht ist. Das Ventilglied 16 ist hier verdrehbar im Ventil gelagert und weist eine Öffnung auf, durch welche die Ventilgliedwand durch den Öldruck in Richtung der Ventilbohrung beaufschlagt wird.

Die Figuren 6a und 6b zeigen eine beispielhafte Ausführungsform des Ventils 10 mit am Außenumfang des Ventilglieds 16 vorgesehener Drosselkontur 20 und einer Ventilbohrung 14, die durch eine entsprechende Bohrung einer in das Türschließergehäuse 28 einsetzbaren Hülse 30 gebildet ist, die mit einer durch einen Dichtring gebildeten Kontur 24 versehen ist. Die Hülse 30 ist in das Türschließergehäuse mit einer Dichtung 34 gegen Öldurchtritt gesichert eingesetzt. In der Fig. 6b sind dabei die Kontur 24 und die Dichtung 34 in einer gemeinsamen Aufnahme kombiniert angeordnet, d.h. diese können separat oder einstückig ausgebildet sein.

Fig. 7a zeigt eine beispielhafte Ausführungsform des Ventils 10 mit am Außenumfang des Ventilglieds 14 vorgesehener Drosselkontur 20 und einer Ventilbohrung 14, die durch eine entsprechende Bohrung einer in das Türschließergehäuse 28 einsetzbaren Hülse 30 gebildet ist, an der eine Kontur 24 ausgebildet oder angeformt ist. Dabei kann das Ventilglied 16 z.B. in Form eines drehbar an einem Ventilkörper 32 gelagerten Ventilkopfes vorgesehen sein.

Mit einer axialen Verschiebung des Ventilglieds 16 bzw. Kolbens werden somit einzelne Abströmkanäle 18 geöffnet bzw. geschlossen und/oder Strömungsquerschnittsverengungen bzw. -erweiterungen der Abströmkanäle 18 freigegeben. Das Ventilglied 16 bzw. der Ventilkopf kann mit einer Kontur 24 versehen sein und/oder einen Dichtring aufweisen, um dichtend mit dem Türschließergehäuse 28 abzuschließen, welche Dichtmittel einstückig angeformt oder als separates Teil am Ventil 10 festgelegt werden können. Wird durch diese Ausbildung ein Hinterschnitt gebildet, wird dadurch ein blendenähnliches Strömungsverhalten erzeugt, während bei einer Ausführung ohne Hinterschnitt ein drosselähnliches Strömungsverhalten bewirkt ist. Die Ab- oder Anströmkanäle 28 können auch direkt in der Kolbenlauffläche des Schließers oder am Ventilkopf vorgesehen sein. Die Strömungsquerschnittsänderungen der Abströmkanäle 18 können an die Steigung eines Gewindes des Ventils 10 angepasst sein, über das der Ventilhub verstellbar ist, um dadurch die Einstellbarkeit zu verbessern. Die Abströmkanäle 18 bzw. die Drosselkontur 20 können auch direkt im Türschließergehäuse 28 auf der Kolbenlauffläche vorgesehen sein, so dass keine Regulierventile mehr erforderlich sind. Es sind beliebige Kombinationen von Strömungsquerschnittsveränderungen denkbar. Entsprechend sind beispielsweise eine jeweilige Schließverzögerung, Schließzeit, Endschlag und/oder dergleichen realisierbar. Dabei ist in der Darstellung gemäß Fig. 4 beispielsweise eine Abströmkanal 18 mit einer Kombination aus Stufen und Steigung (vgl. Fig. 4 rechts unten) sowie ein Abströmkanal 18 mit einer konstanten Steigung (vgl. Fig. 4 links unten) erkennbar.

In Fig. 7b ist eine weitere Ausgestaltung gezeigt, bei der die über ein Gewinde 36 festgelegte Hülse 30 eine Dichtung 34 trägt, welche den Durchtritt des Hydrauliköls durch einen Spalt 38 in einen Anfangsbereich der Hülse 30 erlaubt, wodurch Druck auf die Hülsenaußenwand in Richtung des Ventilgliedes 16 ausgeübt wird, und dadurch den Hydraulikölfluss konstant hält.

Mit einer in Axialrichtung wenig hohen Kontur 24 mit einem Hinterschnitt (vgl. Fig. 4 und 5), ergibt sich ein blendenähnliches Strömungsverhalten. Dagegen ergibt sich bei einer jeweiligen Ausführung ohne einen solchen Hinterschnitt oder mit einer in Axialrichtung höheren Kontur 24 ein drosselähnliches Strömungsverhalten.

Die Fig. 8 zeigt ein Ventil mit am Außenumfang des Ventilglieds vorgesehener Drosselkontur 20, wobei der Dichtring 24 direkt in das Türschließergehäuse eingebracht ist.

Bei einigen Ausführungsformen wird das Hydraulikfluid unterhalb des Ventilglieds 16 abgeführt und weiter oben seitlich zugeführt. Demgegenüber wird bei den anderen Ausführungsformen das Hydraulikfluid 12 von unten zugeführt und weiter oben seitlich abgeführt.

### Bezugszeichenliste

- 10: Ventil
- 12: Hydraulikfluid
- 14: Ventilbohrung
- 16: Ventilglied
- 18: Abströmkanal
- 20: Drosselkontur
- 22: axiale Verschiebung
- 24: Kontur
- 26: Gewinde
- 28: Türschließergehäuse
- 30: Hülse
- 32: Ventilkörper
- 34: Dichtung
- 36: Gewinde
- 38: Spalt

## Patentansprüche

1. Hydraulischer Tür-, Tor- oder Fensterantrieb mit einem Antriebsgehäuse (28) und einem Ventil (10), wobei das Ventil (10) in einem Hydraulikkanal des hydraulischen Tür-, Tor- oder Fensterantriebs angeordnet ist, durch den Hydraulikfluid (12) strömen kann, mit einem in einer Ventilbohrung (14) des Ventils (10) axial verschiebbaren Ventilglied (16) und einer am Innenumfang der Ventilbohrung (14) mehrere Abströmkanäle (18) umfassenden Drosselkontur (20), die in Abhängigkeit von der axialen Verschiebung (22) des Ventilglieds (16) relativ zur Ventilbohrung (14) für ein Überströmen des Hydraulikfluids (12) geöffnet oder geschlossen werden und durch die über eine axiale Verschiebung (22) des Ventilglieds (16) der Durchfluss des überströmenden Hydraulikfluids (12) regulierbar ist der hydraulische Tür-, Tor- oder Fensterantrieb eine Hülse (30) umfasst, die in eine entsprechende Bohrung des Antriebsgehäuses eingesetzt ist, und die Ventilbohrung (14) durch die entsprechende Bohrung in der die in das Antriebsgehäuse (28) eingesetzten Hülse (30) gebildet ist, und am Innenumfang der Hülse (30) die Drosselkontur (20) vorgesehen ist,
**dadurch gekennzeichnet,**
**dass** die Drosselkontur (20) mehrere in Umfangsrichtung verteilte Abströmkanäle (18) umfasst, sich ein jeweiliger Abströmkanal (18) der Drosselkontur (20) zumindest im Wesentlichen in axialer Richtung erstreckt, in der das Ventilglied (16) verschiebbar ist,
und **dass** verschiedene Abströmkanäle (18) unterschiedliche Strömungsquerschnitte aufweisen, bei denen die Drosselkontur (20) zumindest einen Abströmkanal (18) mit einem zumindest abschnittsweise stufenweise größer bzw. stufenweise kleiner werdenden Strömungsquerschnitt und/oder zumindest einen Abströmkanal (18) mit einem zumindest abschnittsweise in Axialrichtung kontinuierlich größer bzw. kontinuierlich kleiner werdenden Strömungsquerschnitt umfasst.

2. Ventil nach Anspruch 1,
**dadurch gekennzeichnet, dass** die Drosselkontur(20) zusätzlich auch am Außenumfang eines Abschnitts des Ventilglieds (16) vorgesehen ist

3. Ventil nach Anspruch 1 oder 2,
**dadurch gekennzeichnet, dass** das Ventilglied (16) eine mit der am Innenumfang der Hülse (30) vorgesehenen Drosselkontur (20) zusammenwirkende, vom Ventilglied (16) radial abragende Kontur (24) aufweist, und optional zusätzlich, wenn abhängig von Anspruch 2, der Innenumfang der Hülse (30) eine, mit der am Außenumfang des Ventilglieds (16) vorgesehenen Drosselkontur (20) zusammenwirkende, radial abragende Kontur (24) aufweist.

4. Ventil nach Anspruch 3,
**dadurch gekennzeichnet, dass** die Kontur (24) durch einen in einer Nut am Außenumfang des Ventilglieds (16) angeordneten Dichtring bzw. durch einen in einer Nut am Innenumfang der Hülse (30) angeordneten Dichtring gebildet ist.

5. Ventil nach Anspruch 1,
**dadurch gekennzeichnet, dass** die Drosselkontur (20) zumindest einen Abströmkanal (18) mit einem in Axialrichtung zumindest abschnittsweise konstanten Strömungsquerschnitt umfasst.

6. Ventil nach zumindest einem der vorstehenden Ansprüche,
**dadurch gekennzeichnet, dass** die mehreren Abströmkanäle (18) zumindest teilweise eine unterschiedliche axiale Länge besitzen.

7. Ventil nach zumindest einem der vorstehenden Ansprüche,
**dadurch gekennzeichnet, dass** das Ventilglied (16) durch einen in der Ventilbohrung (14) verschiebbaren Kolben gebildet ist.

8. Ventil nach zumindest einem der vorstehenden Ansprüche,
**dadurch gekennzeichnet, dass** die Drosselkontur (20) zumindest einen Abströmkanal (18) umfasst, dessen axiale Strömungsquerschnittsänderung an den Hub des Ventilglieds (16) bzw. an die Steigung eines Gewindes (26) angepasst ist, über das der Hub des Ventilglieds (16) einstellbar ist.

9. Ventil nach Anspruch 8,
**dadurch gekennzeichnet, dass** die Hülse (30) in das Antriebsgehäuse (28) einschraubbar, einpressbar, einklipsbar oder dergleichen ist.

## Claims

1. Hydraulic door, gate or window drive having a drive housing (28) and a valve (10), wherein the valve (10) is arranged in a hydraulic duct of the hydraulic door, gate or window drive through which hydraulic fluid (12) can flow, having a valve member (16) which is axially displaceable in a valve bore (14) of the valve (10), and having a throttle contour (20) which comprises a plurality of outflow ducts (18) on the inner circumference of the valve bore (14) and which, in dependence on the axial displacement (22) of the valve member (16) relative to the valve bore (14) are opened or closed to allow overflow of the hydraulic fluid (12) and by means of which the throughflow of the overflowing hydraulic fluid (12) can be regulated via an axial displacement (22) of the valve member (16), the hydraulic door, gate or window drive comprising a sleeve (30) which is inserted into a corresponding bore of the drive housing, and the valve bore (14) being formed by the corresponding bore in the sleeve (30) inserted into the drive housing (28), and the throttle contour (20) being provided on the inner circumference of the sleeve (30),
**characterized**
**in that** the throttle contour (20) comprises a plurality of outflow ducts (18) distributed in the circumferential direction, a respective outflow duct (18) of the throttle contour (20) extending at least substantially in the axial direction in which the valve member (16) is displaceable,
and **in that** different outflow ducts (18) have different flow cross sections in which the throttle contour (20) comprises at least one outflow duct (18) having a flow cross section which, at least in certain portions, becomes larger or smaller in a stepwise manner, and/or comprises at least one outflow duct (18) having a flow cross section which, at least in certain portions, becomes continuously larger or continuously smaller in the axial direction.

2. Valve according to Claim 1,
**characterized in that** the throttle contour (20) is additionally also provided on the outer circumference of a portion of the valve member (16) .

3. Valve according to Claim 1 or 2,
**characterized in that** the valve member (16) has a contour (24) which interacts with the throttle contour (20) provided on the inner circumference of the sleeve (30) and which projects radially from the valve member (16), and optionally in addition, if dependent on Claim 2, the inner circumference of the sleeve (30) has a radially projecting contour (24) which interacts with the throttle contour (20) provided on the outer circumference of the valve member (16).

4. Valve according to Claim 3,
**characterized in that** the contour (24) is formed by a sealing ring arranged in a groove on the outer circumference of the valve member (16) or by a sealing ring arranged in a groove on the inner circumference of the sleeve (30).

5. Valve according to Claim 1,
**characterized in that** the throttle contour (20) comprises at least one outflow duct (18) having a flow cross section which, at least in certain portions, is constant in the axial direction.

6. Valve according to at least one of the preceding claims,
**characterized in that** the plurality of outflow ducts (18) at least partially have a different axial length.

7. Valve according to at least one of the preceding claims,
**characterized in that** the valve member (16) is formed by a piston which is displaceable in the valve bore (14).

8. Valve according to at least one of the preceding claims,
**characterized in that** the throttle contour (20) comprises at least one outflow duct (18) whose axial flow cross section variation is adapted to the stroke of the valve member (16) or to the pitch of a thread (26) via which the stroke of the valve member (16) can be adjusted.

9. Valve according to Claim 8,
**characterized in that** the sleeve (30) can be inserted into the drive housing (28) by screwing, pressing, clipping or the like.

## Revendications

1. Dispositif d'entraînement hydraulique pour une porte, un portail ou une fenêtre, comprenant un carter de dispositif d'entraînement (28) et une soupape (10), la soupape (10) étant disposée dans un canal hydraulique du dispositif d'entraînement hydraulique pour une porte, un portail ou une fenêtre par lequel un fluide hydraulique (12) peut circuler, comprenant un élément de soupape (16) axialement coulissant dans un alésage de soupape (14) de la soupape (10) et un contour d'étranglement (20) comprenant plusieurs canaux d'écoulement (18) sur la circonférence intérieure de l'alésage de soupape (14) qui sont ouverts ou fermés en fonction du coulissement axial (22) de l'élément de soupape (16) par rapport à l'alésage de soupape (14) pour un débordement du fluide hydraulique (12), et qui permettent de réguler le débit du fluide hydraulique (12) débordant par un décalage axial (22) de l'élément de soupape (16), le dispositif d'entraînement hydraulique pour une porte, un portail ou une fenêtre comprenant une douille (30) qui est insérée dans un alésage correspondant du carter de dispositif d'entraînement, et l'alésage de soupape (14) étant formé par l'alésage correspondant dans la douille (30) insérée dans le carter de dispositif d'entraînement (28), et le contour d'étranglement (20) étant prévu sur la circonférence intérieure de la douille (30),
**caractérisé**
**en ce que** le contour d'étranglement (20) comprend plusieurs canaux d'écoulement (18) répartis dans la direction circonférentielle, un canal d'écoulement respectif (18) du contour d'étranglement (20) s'étendant au moins substantiellement dans la direction axiale dans laquelle l'élément de soupape (16) est coulissant,
et **en ce que** différents canaux d'écoulement (18) présentent différentes sections d'écoulement pour lesquelles le contour d'étranglement (20) comprend au moins un canal d'écoulement (18) ayant une section d'écoulement augmentant progressivement ou diminuant progressivement au moins par endroits, et/ou comprend au moins un canal d'écoulement (18) ayant une section d'écoulement augmentant en continu ou diminuant en continu au moins par endroits dans la direction axiale.

2. Soupape selon la revendication 1, **caractérisée en ce que** le contour d'étranglement (20) est en outre prévu aussi sur la circonférence extérieure d'une partie de l'élément de soupape (16).

3. Soupape selon la revendication 1 ou 2, **caractérisée en ce que** l'élément de soupape (16) présente un contour (24) coopérant avec le contour d'étranglement (20) prévu sur la circonférence intérieure de la douille (30) et dépassant radialement de l'élément de soupape (16), et en option en plus, lorsqu'elle dépend de la revendication 2, la circonférence intérieure de la douille (30) présente un contour (24) coopérant avec le contour d'étranglement (20) prévu sur la circonférence extérieure de l'élément de soupape (16) et dépassant radialement.

4. Soupape selon la revendication 3, **caractérisée en ce que** le contour (24) est formé par une bague d'étanchéité disposée dans une rainure sur la circonférence extérieure de l'élément de soupape (16) ou par une bague d'étanchéité disposée sur la circonférence intérieure de la douille (30).

5. Soupape selon la revendication 1, **caractérisée en ce que** le contour d'étranglement (20) comprend au moins un canal d'écoulement (18) ayant une section d'écoulement constante au moins par endroits dans la direction axiale.

6. Soupape selon au moins l'une des revendications précédentes, **caractérisée en ce que** les plusieurs canaux d'écoulement (18) ont une longueur axiale différente au moins en partie.

7. Soupape selon au moins l'une des revendications précédentes, **caractérisée en ce que** l'élément de soupape (16) est formé par un piston coulissant dans l'alésage de soupape (14).

8. Soupape selon au moins l'une des revendications précédentes, **caractérisée en ce que** le contour d'étranglement (20) comprend au moins un canal d'écoulement (18) dont un changement de section d'écoulement axiale est adapté à la course de l'élément de soupape (16) ou au pas d'un filet (26) permettant de régler la course de l'élément de soupape (16).

9. Soupape selon la revendication 8, **caractérisée en ce que** la douille (30) peut être vissée, ajustée, enclenchée ou similaires dans le carter de dispositif d'entraînement (28).
